# EUROPEAN PATENT SPECIFICATION

(11) **EP 4 581 276 B1**
(45) Date of publication and mention of the grant of the patent: **12.08.2026**
(21) Application number: 23762432.5
(22) Date of filing: 29.08.2023
(51) Int. Cl.: F04D 1/06, F04D 7/02, F04D 13/06, F04D 13/08, F04D 29/044, F04D 29/58, H02K 1/276, H02K 5/20, H02K 7/00, H02K 7/14, H02K 9/19

(54) **A CRYOGENIC SUBMERGED FUEL PUMP**
KRYOGENE TAUCHKRAFTSTOFFPUMPE
POMPE À CARBURANT IMMERGÉE CRYOGÉNIQUE

(30) Priority: 30.08.2022 EP 22192732
(43) Date of publication of application: 09.07.2025
(73) Proprietor: Svanehøj Danmark A/S, 9230 Svenstrup J (DK)
(72) Inventor: WINTHER, Michael, 9230 Svenstrup J (DK)
(74) Representative: Plougmann Vingtoft a/s
(86) International application number: PCT/EP2023/073652
(87) International publication number: WO 2024/047031

(56) References cited:
- FR-A5- 2 226 026
- JP-U- H0 730 396
- US-A- 3 764 236
- US-A1- 2010 166 578

## Description

### FIELD OF THE INVENTION

The present invention relates to a submerged fuel pump for pumping liquidised fluids, in particular a cryogenic submerged fuel pump for pumping liquidised fuel, such as liquid natural gas (LNG), hydrogen, methanol, ethane, liquefied petroleum gas (LPG) or the like.

### BACKGROUND OF THE INVENTION

Submerged fuel pumps for liquidised fuel such as LNG are well known in the art.

In WO 2015/081314 A2 there is disclosed a cryogenic submerged multi-stage pump assembly including a vertically oriented pump shaft. A permanent magnet electrical motor includes a rotor attached to the pump shaft and a stator disposed about the rotor. A first-stage impeller assembly includes a first impeller attached to the pump shaft, the first impeller configured to move a cryogenic fluid from a first impeller inlet to a first impeller outlet when the pump shaft is rotated by the electric motor.

WO 2015/081314 A2 also discloses a hollow permanent magnet rotor in which the pump shaft is mounted. The pump shaft is mounted to the hollow rotor at the top as the top end of the pump shaft is provided with a threated portion which is engaged by a nut, and below the motor, a number of impellers are mounted to the pump shaft.

US 3,764,236 discloses a modular multi-stage pump especially suited for pumping liquids whose external leakage may be hazardous such as liquified gases, including cryogenic fluids, which includes a fully submerged pump and motor unit preferably immersed in a suction pot and sealed with only two external static seals.

Similar assemblies using a threated portion and a nut to coaxially mount the pump shaft to the motor drive shaft is also known JP H07 30396 U. However, such type of assembly may be disadvantageous, in particular in cryogenic conditions, as the threated engagement may untighten and thereby lose the firm mounting between the two shafts during operation of the pump.

### OBJECT OF THE INVENTION

It is an object of the present invention to provide an improved submerged pump for pumping liquidised fluids, in particular a cryogenic submerged fuel pump for pumping liquidised fuel, which is compact in its design and with an improved efficiency.

### SUMMARY OF THE INVENTION

In the present disclosure, there is described several embodiments of a submerged pump for pumping liquidised fluids, in particular a cryogenic submerged fuel pump for pumping liquidised fuel, such as liquid natural gas (LNG), hydrogen, methanol, liquefied petroleum gas (LPG) or the like liquidised cryogenic dielectric fluids, wherein the pump comprises a housing having a lower fluid inlet and an upper fluid outlet and accommodating a vertically oriented pump shaft having a top end and a lower end; a permanent magnet electrical motor having a rotor with a hollow motor drive shaft and a stator around said rotor; said drive shaft having a top end and a lower end; at least one impeller, which is mounted to the pump shaft in the region of the lower end thereof, for moving cryogenic fluid from an inlet to an outlet; wherein the pump shaft is concentrically mounted in the hollow motor drive shaft at the top ends of said pump shaft and said drive shaft; and wherein the mounting of the pump shaft and the motor shaft is a collet clamp connection for interlocking the motor and the pump shafts at the top ends of said shafts.

It is found advantageous to use a collet clamp connection between the hollow motor shaft and the pump shaft as this allows for a compact design and a firm connection in particular with regard to the low temperatures, such as cryogenic conditions, the pump is operating in. The collet clamp connection allows for the shafts to thermally expand and contract due to the low operating temperatures without compromising the firm mounting of the pump shaft in the motor shaft so that it is ensured that the shafts are firmly connected. By the design according to the present invention, the pump can operate in submerged conditions without air in temperatures as low as ÷ 160°C or even as low as ÷ 200°C.

By a pump according to the invention a slim design may be provided. Accordingly, in the preferred embodiments, the pump shaft extends below the motor shaft, where the at least one impeller is mounted to the shaft below the motor. Preferably, a plurality of impellers may be provided on the pump shaft for providing a multistage centrifugal pump.

In an embodiment, the pump shaft is a smooth shaft, such as rod-shaped shaft with an even diameter. This allows for a simple manufacturing and assembly of the pump.

Advantageously, the collet clamp connection mounting the pump shaft to the motor shaft is a collet clamp, which is made of an alloy suitable as cryogenic material. More preferably, the alloy is a metal alloy, such as bronze or stainless steel. This ensures a steady and fixed connection at the cryogenic conditions.

In the preferred embodiments, the collet clamp connection comprises a clamping collet having a conical external clamping surface engaging with hollow motor shaft and a cylindrical inner clamping surface clamping the collet around the pump shaft, and wherein the clamping collet is mounted to the motor shaft by a clamping nut. The clamping collet design allows for a firm grip around the pump shaft and ensures no mutual angular displacement of the motor and pump shafts can occur during operation of the pump.

In the preferred embodiments of the pump according to the invention, a main bearing is provided at the upper end of the motor shaft for taking up any axial forces is provided in the pump. This is found advantageous since only a single bearing is needed to take up the axial forces in the pump. Preferably, the main bearing is a hybrid bearing, in particular a hybrid ball bearing, such as a hybrid ball bearing. Hereby, axial forces as well as radial forces may be absorbed.

Advantageously, a lower bearing is also provided at the lower end of the motor shaft for taking up any radial forces. This lower bearing may in one embodiment be a carbon guide bearing.

Preferably, the motor shaft is provided with a coating for additional hardness, such as a spray coating forming a crack-free coating, in order to provide a durable shaft which is resistant to wear.

### DETAILED DESCRIPTION

The invention is described in the following with reference to the accompanying drawings, in which:
- Figure 1: is a cross-sectional side view of a cryogenic submerged fuel pump according to an embodiment of the invention;
- Figure 2: is a cross-sectional side view of the electrical permanent magnet synchronous motor of the pump in fig. 1;
- Figure 3: is a cross-sectional view of the electrical permanent magnet synchronous motor orthogonal to the view of fig. 2;
- Figure 4: is a cross-sectional view of a rotor in the electrical permanent magnet synchronous motor without the magnets installed;
- Figure 5: is a detailed view of section B in fig. 4;
- Figure 6: is a detailed view of section C in fig. 5;
- Figure 7: is a side view of a clamping collet for the connection of the motor shaft and the pump shaft shown in fig. 2; and
- Figure 8: is and end-view of said clamping collet.

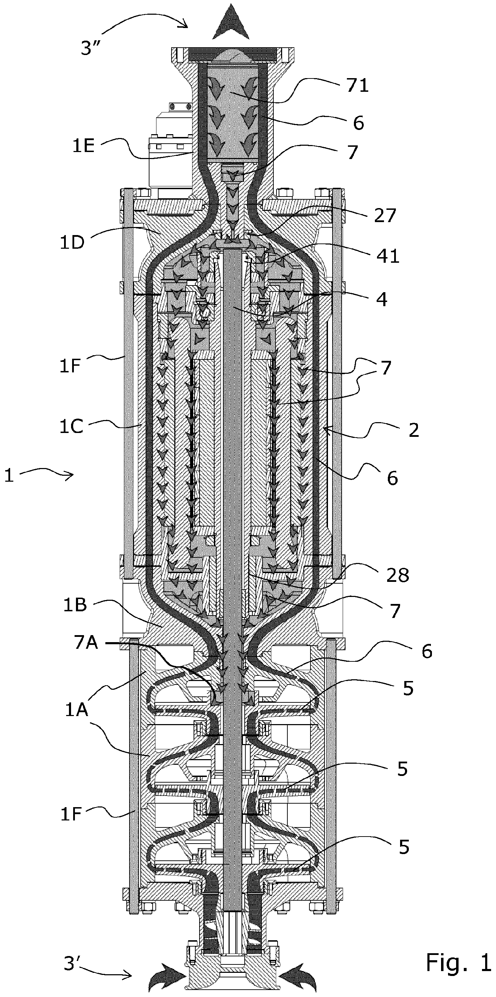

In figure 1 there is shown a cross-sectional view of a cryogenic submerged fuel pump for pumping liquidised fuel, such as liquid natural gas (LNG), hydrogen, methanol, ethane, liquefied petroleum gas (LPG) or the like. The pump comprises a housing 1 having a lower fluid inlet 3' and an upper fluid outlet 3". The pump further comprises a vertically oriented pump shaft 4 and a permanent magnet electrical motor 2.

The pump shaft 4 extends through the electric motor 2. Below the electric motor 2, a plurality of impellers 5, such as three as shown in fig. 1, are mounted on the pump shaft 4 for providing a multistage centrifugal pump as the impellers or vanes 5, which is mounted to the pump shaft 4 centrifugally is moving cryogenic fluid from the pump inlet 3' to the pump outlet 3" as the impellers 5 are rotated by the pump shaft 4.

This main flow of liquidised fluid constitutes the main liquid flow from the pump inlet 3' to the pump outlet 3", which in fig. 1 is indicated by the reference number 6. As shown in fig. 1, the main flow 6 is provided coaxially around the electrical motor 2.

As shown in fig. 1, the components of the pump are accommodated in a housing 1. The housing comprises a number of intermediate chambers 1A stacked on top of each other and each accommodating an impeller 5, a lower flow branch portion 1B, a central motor housing portion 1C and an upper flow branch portion 1D, and an upper outlet housing portion 1E, and the main flow path 6 is provided through these housing portions 1A-1E.

The housing portions 1A-1E are provided with external assembly flanges and assembled to each other by peripherally provided stay bolts 1F.

The lower flow branch 1B is provided with a flow path for diverting the main flow 6 around the electric motor 2. Accordingly, the lower flow branch 1B has a central entry position in fluid communication with the top of the uppermost of the intermediate chambers 1A and a radial flow delivery position.

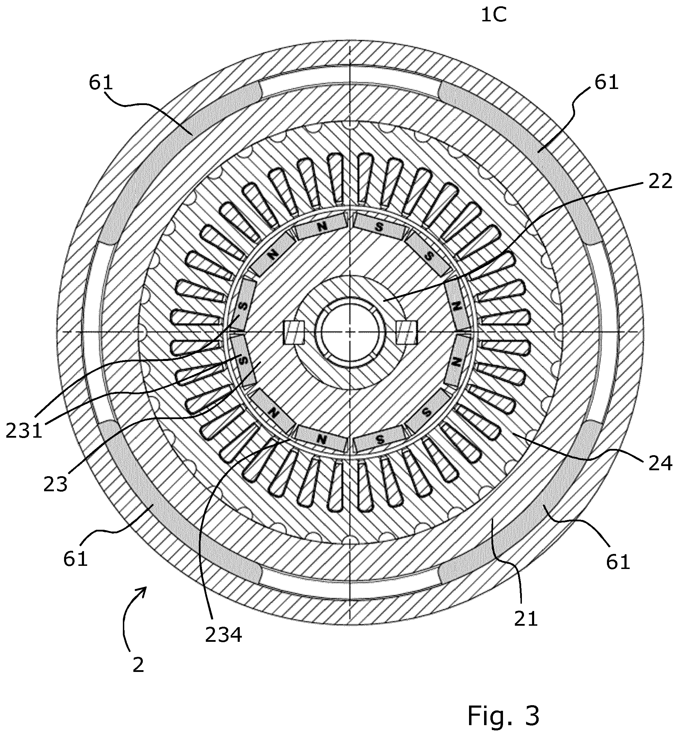

The central housing portion 1C is provided with flow channels 61 coaxially at a radial position (see fig. 3), which are in fluid communication with corresponding flow path of the lower flow branch 1B. The upper flow branch 1D is provided with flow paths between a radially outward receipt position to a central outlet flow exit, where said radially outward receipt positions are in fluid communication with the coaxial flow channels 61 of the central housing portion 1C.

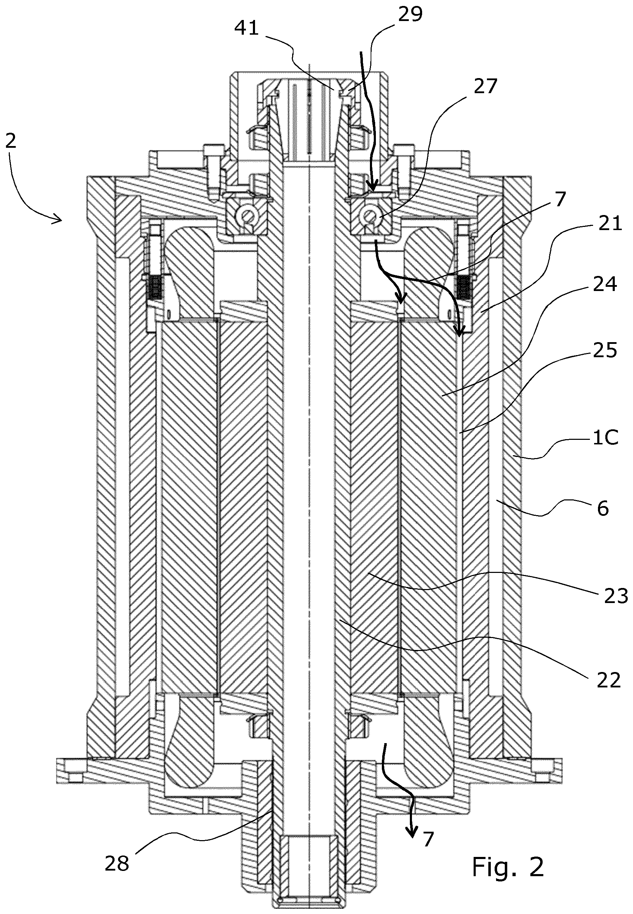

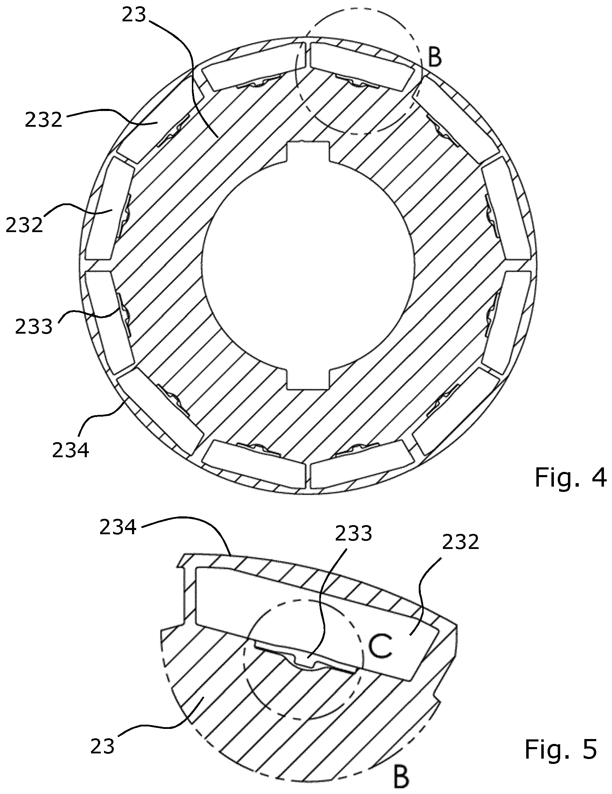

The electrical motor 2 of the pump is shown in more detail in figures 2 and 3 and details thereof also in figures 4 to 6. Accommodated in the motor housing 21, the electric motor 2 comprises a rotor assembly with a rotor body 23 mounted on a motor shaft 22 and where a plurality of permanent-magnetic magnets 231 are provided in along the periphery 234 of the rotor body 23. The electric motor also comprises a stator 24 having coils arranged concentrically around said rotor assembly. The rotor assembly further comprises a mechanical magnet retention system for holding the magnets 231 in place in the rotor body 23. The mechanical magnet retention system comprises plurality of axially oriented slots 232 in the periphery of the rotor body 234 wherein the permanent magnets 231 are retained.

The rotor body 23 is firmly mounted on the motor shaft by any suitable means.

The motor shaft 22 is hollow and the pump shaft 4 is concentrically mounted in the hollow motor drive shaft 22, as shown in fig. 1. The assembly of the pump shaft 4 and the motor shaft 22 is provided by a collet clamp connection for interlocking the motor shaft 22 and the pump shaft 4 at the top ends of the shafts 4, 22. The pump shaft 4 is a smooth shaft, preferably a cylindrically shaped elongated shaft with an even diameter.

The collet clamp connection mounting the pump shaft 4 to the motor shaft 22 is a collet clamp 41, which is made of an alloy suitable as cryogenic material, such as a metal alloy, for instance bronze or stainless steel.

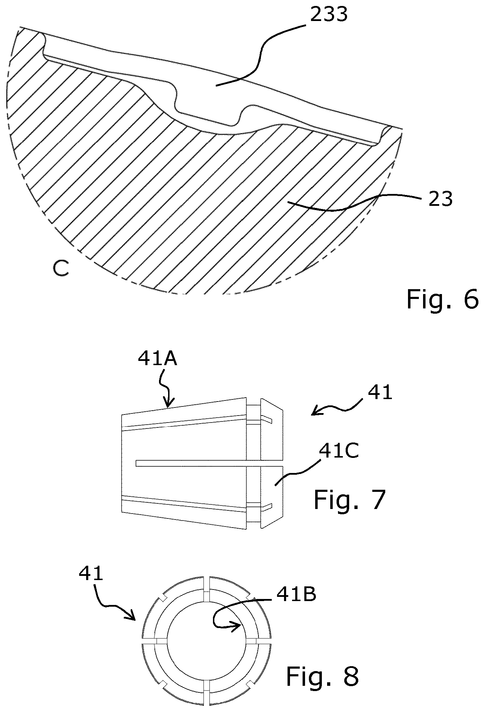

With reference to figures 1, 2 and also figures 7 and 8, the collet clamp connection comprises a clamping collet 41 having a conical external clamping surface 41A engaging with a correspondingly conical inner surface of the end section of the hollow motor shaft 22 and a cylindrical inner clamping surface 41B clamping the collet 41 around the pump shaft 4. The clamping collet 41 is mounted to the motor shaft 22 by a clamping nut 29 (see fig. 2), which is provided with an inner surface with a conical shape that is engaging the conical collar surface 41C of the collet clamp 41. The clamping nut is in threated engagement on the end section of the motor shaft 22 and by tightening the clamping nut 29 to the end of the motor shaft 22, the clamping collet 41 is forced into the receiving surface of the motor shaft 22.

The motor shaft 22 is supported in the motor housing 21 and consequently also in the pump housing 1 by a main bearing 27, which is provided at the upper end of the motor shaft 22 for taking up any axial forces that may occur in the pump. In some currently preferred embodiments, the main bearing 27 is a hybrid bearing, in particular a hybrid ball bearing, such as a deep groove ball bearing. A lower bearing 28 is provided at the lower end of the motor shaft 22 in the motor 2 for absorbing any radial forces occurring. The lower bearing 28 is a carbon guide bearing. The motor shaft 22 may also be provided with a coating for additional hardness, such as a spray coating forming a crack-free coating. This can ensure the performance of the motor shaft 22 at cryogenic conditions.

As shown in fig. 1, a secondary liquid flow 7 is provided for cooling the electric motor 2 and lubricating the bearings 27, 28 in the motor 2. The secondary liquid flow 7 is a partial flow of the main flow 6. This secondary flow 7 is a reverse liquid flow from the region of the pump outlet 3" through the electrical motor 2 to a radially central space 7A on the upper side of the uppermost impeller 5 above the region of the pump inlet 3'.

A filter 71 is provided in the upper outlet housing portion 1E of the housing 1 at the inlet for the secondary flow 7. This filter 71 is provided at the inlet of the secondary liquid flow path 7 so that any contaminants in the main flow 6 are prevented from entering the motor 2 and the bearings 27, 28, thereby protecting the motor 2 and the bearings 27, 28 and prolonging the lifetime of these components. The filter 71 is preferably a cryogenic filter, and even more preferable, the filter 71 may be a self-cleaning filter, such as a side-flow filter.

The first liquid flow 6 is the main flow where the pressure is increased from the inlet 3' to the outlet 3" in the pump. The reverse secondary flow 7 is provided due to the pressure difference in the pump so that a small portion of the main flow 6 is reversed through the electric motor 2 to cool the motor and lubricate the bearings 27, 28. Thus, the bearings are lubricated by the main fluid flowing through the pump.

The pressure difference is achieved by providing the exit of the secondary flow at the radially central space 7A on the upper side of the uppermost impeller 5 (or in one embodiment of the invention the only impeller, if the pump is designed with only one impeller 5).

The secondary liquid flow 7 is a partial flow of the main flow 6. Due to the narrow passages through the motor 2 and the bearings 27, 28, the flow resistance in the secondary flow path 7 is quite high. This means that the secondary liquid flow 7 is merely a small amount of the main liquid flow 6, such as approx. at least 15-35 times smaller.

Around the cylindrical outer periphery of the stator 24, a plurality of axially oriented flow channels 25 for cooling the electric motor 2, as these channels 25 constitute a substantial portion of the secondary flow path 7 providing cooling for the motor.

As described above, the electric motor is a permanent magnet synchronous motor where the magnets are provided in slots on the rotor. With reference to figures 4 to 6, in the mechanical magnet retention system, each slot 232 is provided with a leaf spring member 233 to retain the magnets 231 inserted in the slots 232. The leaf spring members 233 are provided in shallow depressions in the slots 232 and are adapted to provide radially outwardly directed forces on the magnets 231, when the magnets 231 are inserted in the slots 232 (see fig. 3). The magnets 231 are provided with a cross-sectional shape fitting tightly into the slots 232 over the leaf springs 233.

The slots 232 are provided coaxially in the rotor 23 and may be open at both ends for the insertion of magnets 231. In the embodiment shown in fig. 3, a total of twelve slots 232 are provided evenly distributed along the cylindrical surface 234 of the rotor body 23. The magnetic pole of neighbouring magnets on the rotor surface is altered for every second magnet 231, such that the magnets 231 on the surface 234 are provided in the configuration N-N-S-S-N-N-S-S-N-N-S-S.

In an embodiment, the rotor body 23 is made by a plurality of sheet laminates made of magnetic steel, in particular electric steel. The sheet laminates may be thin, such as less than 1 mm thick, preferably between 0.35 mm to 0.5 mm in thickness. In a further embodiment, the leaf springs 233 may be laser cut into the laminates and are therefore made of the same material.

In the present disclosure, terms are used like "vertical", "horizontal" and the like. Such term are to be understood as relative directional terms between the relevant elements, flanges or the like.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

Above, the invention is described with reference to some currently preferred embodiments of a submerged fuel pump. However, by the invention it is realised that other embodiments and variants may be provided without departing from the scope of the invention as defined in the accompanying claims.

## Claims

1. A submerged fuel pump for pumping liquidised fluids, in particular a cryogenic submerged fuel pump for pumping liquidised fuel, such as liquid natural gas (LNG), hydrogen, methanol, ethane, liquefied petroleum gas (LPG) or the like, said pump comprising
a housing (1) having a lower fluid inlet (3') and an upper fluid outlet (3") and accommodating
a vertically oriented pump shaft (4) having a top end and a lower end;
a permanent magnet electrical motor (2) having a rotor (23) with a hollow motor drive shaft (22) and a stator (24) around said rotor (23); said drive shaft (22) having a top end and a lower end;
at least one impeller (5), which is mounted to the pump shaft (4) in the region of the lower end thereof, for moving cryogenic fluid from an inlet (3') to an outlet (3");
wherein the pump shaft (4) is concentrically mounted in the hollow motor drive shaft (22) at the top ends of said pump shaft (4) and said motor drive shaft (22); and **characterised in that**
the mounting of the pump shaft (4) and the motor drive shaft (22) is a collet clamp connection (41) for interlocking the motor and the pump shafts at the top ends of said shafts.

2. A pump according to claim 1, wherein the pump shaft (4) extends below the motor shaft (22), where the at least one impeller (5) are mounted to the shaft below the motor (2).

3. A pump according to claim 1 or 2, wherein a plurality of impellers (5) are provided on the pump shaft (4) for providing a multistage centrifugal pump.

4. A pump according to any one of the preceding claims, wherein the pump shaft (4) is a smooth shaft, such as rod-shaped shaft with an even diameter.

5. A pump according to any one of the preceding claims, wherein the collet clamp connection (41) mounting the pump shaft (4) to the motor shaft (22) is a collet clamp (41), which is made of an alloy suitable as cryogenic material.

6. A pump according to claim 5, wherein the alloy is a metal alloy, such as bronze or stainless steel.

7. A pump according to any one of the preceding claims, wherein the collet clamp connection comprises a clamping collet (41) having a conical external clamping surface (41A) engaging with hollow motor shaft (22) and a cylindrical inner clamping surface (41B) clamping the collet (41) around the pump shaft (4), and wherein the clamping collet (41) is mounted to the motor shaft (22) by a clamping nut (29).

8. A pump according to claim 7, wherein the clamping collet (41) further comprises a conical collar surface (41C) and wherein the clamping nut (29) is provided with an inner surface with a conical shape that is engaging the conical collar surface (41C) of the collet clamp (41).

9. A pump according to claim 8, wherein the clamping nut (8) is in threated engagement on the end section of the motor shaft (22).

10. A pump according to any one of the preceding claims, wherein a main bearing (27) is provided at the upper end of the motor shaft (22) for absorbing any axial forces is provided in the pump.

11. A pump according to claim 10, wherein the main bearing (27) is a hybrid bearing, in particular a hybrid ball bearing.

12. A pump according to any one of the preceding claims, wherein a lower bearing (28) is provided at the lower end of the motor shaft (22) for absorbing any radial forces.

13. A pump according to claim 12, wherein the lower bearing (28) is a carbon guide bearing.

14. A pump according to any one of the preceding claims, wherein the motor shaft (22) is provided with a coating for additional hardness, such as a spray coating forming a crack-free coating.

## Patentansprüche

1. Tauchkraftstoffpumpe zum Pumpen verflüssigter Fluide, insbesondere eine kryogene Tauchkraftstoffpumpe zum Pumpen von verflüssigtem Kraftstoff, beispielsweise Flüssigerdgas (LNG), Wasserstoff, Methanol, Ethan, Flüssiggas (LPG) oder dergleichen, wobei die Pumpe umfasst:
ein Gehäuse (1), das einen unteren Fluideinlass (3') und einen oberen Fluidauslass (3") aufweist und beherbergt:
eine vertikal ausgerichtete Pumpenwelle (4), die ein oberes Ende und ein unteres Ende aufweist;
einen Permanentmagnet-Elektromotor (2), der einen Rotor (23) mit einer hohlen Motorantriebswelle (22) und einen Stator (24) um den Rotor (23) herum aufweist; wobei die Antriebswelle (22) ein oberes Ende und ein unteres Ende aufweist;
mindestens ein Flügelrad (5), das an der Pumpenwelle (4) im Bereich des unteren Endes davon befestigt ist, zum Bewegen von kryogenem Fluid von einem Einlass (3') zu einem Auslass (3");
wobei die Pumpenwelle (4) konzentrisch in der hohlen Motorantriebswelle (22) an den oberen Enden der Pumpenwelle (4) und der Motorantriebswelle (22) befestigt ist; und **dadurch gekennzeichnet, dass** die Befestigung der Pumpenwelle (4) und der Motorantriebswelle (22) eine Stellringklemmverbindung (41) zum Verriegeln der Motor- und der Pumpenwelle miteinander an den oberen Enden der Wellen ist.

2. Pumpe nach Anspruch 1, wobei sich die Pumpenwelle (4) unterhalb der Motorwelle (22) erstreckt, wobei das mindestens eine Flügelrad (5) an der Welle unterhalb des Motors (2) befestigt ist.

3. Pumpe nach Anspruch 1 oder 2, wobei eine Mehrzahl von Flügelrädern (5) an der Pumpenwelle (4) bereitgestellt ist, um eine mehrstufige Zentrifugalpumpe bereitzustellen.

4. Pumpe nach einem der vorstehenden Ansprüche, wobei die Pumpenwelle (4) eine blanke Welle ist, beispielsweise eine stangenförmige Welle mit einem gleichmäßigen Durchmesser.

5. Pumpe nach einem der vorstehenden Ansprüche, wobei die Stellringklemmverbindung (41), mit der die Pumpenwelle (4) an der Motorwelle (22) befestigt ist, eine Stellringklemme (41) ist, die aus einer als kryogenes Material geeigneten Legierung gefertigt ist.

6. Pumpe nach Anspruch 5, wobei die Legierung eine Metalllegierung ist, beispielsweise Bronze oder rostfreier Stahl.

7. Pumpe nach einem der vorstehenden Ansprüche, wobei die Stellringklemmverbindung einen Klemmstellring (41) umfasst, aufweisend eine konische Außenklemmfläche (41A), die mit der hohlen Motorwelle (22) in Eingriff geht, und eine zylindrische Innenklemmfläche (41B), die den Stellring (41) um die Pumpenwelle (4) herum klemmt, und wobei der Klemmstellring (41) an der Motorwelle (22) über eine Klemmmutter (29) befestigt ist.

8. Pumpe nach Anspruch 7, wobei der Klemmstellring (41) weiter eine konische Kragenfläche (41C) umfasst, und wobei die Klemmmutter (29) mit einer Innenfläche mit einer konischen Form versehen ist, die mit der konischen Kragenfläche (41C) der Stellringklemme (41) in Eingriff geht.

9. Pumpe nach Anspruch 8, wobei die Klemmmutter (8) an dem Endabschnitt der Motorwelle (22) im Gewindeeingriff steht.

10. Pumpe nach einem der vorstehenden Ansprüche, wobei ein Hauptlager (27) an dem oberen Ende der Motorwelle (22) vorgesehen ist, zum Absorbieren von axialen Kräften in der Pumpe vorgesehen ist.

11. Pumpe nach Anspruch 10, wobei das Hauptlager (27) ein Hybridlager ist, insbesondere ein Hybridkugellager.

12. Pumpe nach einem der vorstehenden Ansprüche, wobei ein unteres Lager (28) an dem unteren Ende der Motorwelle (22) zum Absorbieren von radialen Kräften vorgesehen ist.

13. Pumpe nach Anspruch 12, wobei das untere Lager (28) ein Kohlenstoff-Führungslager ist.

14. Pumpe nach einem der vorstehenden Ansprüche, wobei die Motorwelle (22) mit einer Beschichtung für zusätzliche Härte versehen ist, beispielsweise einer Spritzbeschichtung, die eine rissfreie Beschichtung bildet.

## Revendications

1. Pompe à carburant immergée, destinée au pompage de fluides liquéfiés, en particulier pompe à carburant cryogénique immergée, destinée au pompage de carburant liquéfié, tel que gaz naturel liquéfié (GNL), hydrogène, méthanol, éthane, gaz de pétrole liquéfié (GPL) ou similaire, ladite pompe comprenant
un carter (1) comportant une entrée de fluide inférieure (3') et une sortie de fluide supérieure (3") et logeant
un arbre de pompe (4) orienté verticalement, présentant une extrémité supérieure et une extrémité inférieure ;
un moteur électrique (2) à aimants permanents, comportant un rotor (23) muni d'un arbre creux d'entraînement moteur (22) et un stator (24) autour dudit rotor (23) ; ledit arbre d'entraînement (22) présentant une extrémité supérieure et une extrémité inférieure ;
au moins une roue (5), qui est montée sur l'arbre de pompe (4) dans la zone de son extrémité inférieure, pour faire circuler un fluide cryogénique depuis une entrée (3') vers une sortie (3") ;
dans laquelle l'arbre de pompe (4) est monté concentriquement dans l'arbre creux d'entraînement moteur (22) au niveau des extrémités supérieures dudit arbre de pompe (4) et dudit arbre d'entraînement moteur(22) ; et **caractérisée en ce que**
le montage de l'arbre de pompe (4) et de l'arbre d'entraînement moteur (22) est une liaison par pince de serrage (41) destinée à accoupler les arbres du moteur et de la pompe au niveau des extrémités supérieures desdits arbres.

2. Pompe selon la revendication 1, dans laquelle l'arbre de pompe (4) s'étend au-dessous de l'arbre moteur (22), ladite au moins une roue (5) étant montée sur l'arbre au-dessous du moteur (2).

3. Pompe selon la revendication 1 ou 2, dans laquelle une pluralité de roues (5) sont disposées sur l'arbre de pompe (4) afin de réaliser une pompe centrifuge multi-étages.

4. Pompe selon l'une quelconque des revendications précédentes, dans laquelle l'arbre de pompe (4) est un arbre lisse, tel qu'un arbre en forme de tige ayant un diamètre uniforme.

5. Pompe selon l'une quelconque des revendications précédentes, dans laquelle la liaison par pince de serrage (41) raccordant l'arbre de pompe (4) à l'arbre moteur (22) est réalisée par une pince de serrage (41) qui est constituée d'un alliage approprié en tant que matériau cryogénique.

6. Pompe selon la revendication 5, dans laquelle l'alliage est un alliage métallique, tel que le bronze ou l'acier inoxydable.

7. Pompe selon l'une quelconque des revendications précédentes, dans laquelle la liaison par pince de serrage comprend une pince de serrage (41) présentant une surface de serrage externe conique (41A) venant en prise avec l'arbre creux moteur (22) et une surface de serrage interne cylindrique (41B) serrant la pince (41) autour de l'arbre de pompe (4), et dans laquelle la pince de serrage (41) est montée sur l'arbre moteur (22) au moyen d'un écrou de serrage (29).

8. Pompe selon la revendication 7, dans laquelle la pince de serrage (41) comprend en outre une surface de collerette conique (41C) et dans laquelle l'écrou de serrage (29) est doté d'une surface interne de forme conique qui vient en prise avec la surface de collerette conique (41C) de la pince de serrage (41).

9. Pompe selon la revendication 8, dans laquelle l'écrou de serrage (8) est en prise filetée sur la partie d'extrémité de l'arbre moteur (22).

10. Pompe selon l'une quelconque des revendications précédentes, dans laquelle un palier principal (27) est disposé à l'extrémité supérieure de l'arbre moteur (22) pour absorber toutes forces axiales apparaissant dans la pompe.

11. Pompe selon la revendication 10, dans laquelle le palier principal (27) est un palier hybride, en particulier un roulement à billes hybride.

12. Pompe selon l'une quelconque des revendications précédentes, dans laquelle un palier inférieur (28) est disposé à l'extrémité inférieure de l'arbre moteur (22) pour absorber toutes forces radiales.

13. Pompe selon la revendication 12, dans laquelle le palier inférieur (28) est un palier de guidage en carbone.

14. Pompe selon l'une quelconque des revendications précédentes, dans laquelle l'arbre moteur (22) est muni d'un revêtement pour une dureté supplémentaire, tel qu'un revêtement par pulvérisation formant un revêtement exempt de fissures.
